# EUROPEAN PATENT SPECIFICATION

(11) **EP 0 691 479 B1**
(45) Date of publication and mention of the grant of the patent: **17.03.1999**
(21) Application number: 95304220.7
(22) Date of filing: 19.06.1995
(51) Int. Cl.: F16B 19/10

(54) **Blind rivet assembly**
Blindnietanordnung
Ensemble de rivet aveugle

(30) Priority: 05.07.1994 GB 9413516
(43) Date of publication of application: 10.01.1996
(73) Proprietor: EMHART INC., Newark, Delaware 19711 (US)
(72) Inventor: Osborne, Michael, Sutton Coldfield, West Midlands, B73 6LP (GB)
(74) Representative: Dlugosz, Anthony Charles

(56) References cited:
- FR-A- 2 314 387
- FR-A- 2 587 767
- GB-A- 574 766
- US-A- 4 789 283
- US-A- 5 044 850

## Description

This invention is concerned with blind rivet assemblies of the type comprising a rivet body having a shank with a bore extending axially therethrough and a head formed on one end portion of the shank, and a mandrel assembled in the rivet body and comprising a stem portion extending through the bore and a setting head engaged with a tail end face of the rivet body. Such a blind rivet assembly is set by placing the rivet body in a hole in a work piece and then with a tool while restraining the head of the rivet body against movement, drawing the mandrel through the rivet so that the tail end portion of the rivet is caused to expand and set the rivet in the workpiece.

The characteristics of a rivet assembly which make it commercially desirable are
(a) the ability reliably to obtain good expansion of the tail end portion on setting
(b) the ability of the rivet body shank to expand to fill a hole in a workpiece on setting, so that the size of the hole is not critical.
(c) the ability to set satisfactorily in a range of workpiece thicknesses and
(d) the ability, when desired, reliably to retain the head of the mandrel in the rivet after the rivet has been set.

The achievement of these various characteristics necessarily involves a degree of compromise or complication and expense in manufacture.

In EP 168355 a rivet is shown which is said to be particularly good at accommodating a range of work pieces thicknesses, and comprises a series of grooves around the shank of the rivet body at which the rivet is encouraged to flex on setting: Such a rivet is indeed capable of accepting a range of thicknesses, but the performance of the rivet on setting is somewhat dependent on the relative location of the blind face of the workpiece and the grooves. Further the rivet could not be expected to show good mandrel head retention. In EP 536957 a rivet is shown which is specifically designed to give good mandrel head retention - indeed the tail end of the rivet is swaged inwardly to enclose the head of the mandrel. This rivet also comprises grooves intended to give a range of acceptable setting thicknesses. It will be understood that such a rivet not only requires an operation to form the grooves but a further operation on the assembled rivet and mandrel to enclose the head of the mandrel.

Reference is also made to FR-A-2587767 in which a rivet body has a shank comprising a cylindrical wall of substantially uniform thickness with portions of different diameter, and a mandrel having a stem with a neck adjacent the junction of the two portions.

It is an object of the present invention to provide an improved blind rivet assembly.

The present invention provides a blind rivet assembly comprising a rivet body having a shank with a bore extending axially therethrough and a head formed on one end portion of the shank and a mandrel assembled in the rivet body and comprising a stem portion extending through the bore and a setting head engaged with a tail end face of the rivet body. Wherein the shank of the rivet body comprises a cylindrical wall of substantially uniform thickness, a head end portion of the wall defining a shank portion of the bore of a first diameter and a tail end portion of the wall defining a tail end portion of the bore of a second, lesser, diameter, and the stem portion of the mandrel is of substantially uniform diameter, which diameter is less than second lesser diameter of the bore, which stem portion is provided with a neck at which the mandrel may break at the end of a setting operation, which neck is located adjacent the junction between the head end portion and the tail end portion of the wall, and the stem portion has an outwardly extending collar portion of the same diameter as the second diameter of the rivet body bore, which collar is spaced from the neck and the setting head of the mandrel and positioned in the tail end portion of the bore.

There now follows a description, to be read with reference to the accompanying drawings, of a blind rivet assembly embodying the invention.

In the accompanying drawings
Figure 1 show a view of a blind rivet assembly embodying the invention in longitudinal section;
Figures 2 and 3 show examples of the setting of the rivet of Figure 1.

A blind rivet assembly (2) comprises a rivet body (4) which has a shank (6) with a bore (8) extending axially there through an outwardly extending head (10) formed on one end portion of the shank (6). The assembly also comprises a mandrel (12) assembled in the rivet body and comprising a stem portion (14) which is of substantially uniform diameter and a setting head (16) which is engaged with a tail end face (18) of the rivet body (4).

The rivet body is conveniently made by extrusion and is preferably of aluminium alloy though other suitable metals may used. The mandrel (12), which is made by a conventional heading and rolling operation is of mild steel.

The shank (6) of the rivet body (4) comprises a cylindrical wall (20) of substantially uniform thickness. A head end portion of the wall (20) defines a shank portion (22) of the bore (8) of a first diameter d₁, and a tail end portion of the wall (20) defines a tail end portion (24) of the bore (8) of a second diameter d₂, less than the diameter d₁.

The stem portion (14) of the mandrel is of a substantially uniform diameter M, which is less than the diameter d₂ and thus less than the diameter d₁. The stem portion (14) is provided with a circumferential neck (26) at which the mandrel (12) will break on the completion of a setting operation on the blind rivet assembly (2). The neck (26) is located adjacent the junction between the head end portion and the tail end portion of the wall (20).

The stem (14) is provided, between the neck (26) and the head (16), with an outwardly extending collar portion comprising a plurality, in particular four, of lugs (28) having outer faces which are of the same diameter as the second diameter d₂ of the rivet body. The lugs (28) thus lie in the tail end portion (24) of the bore (8) in contact with the inner surface of the wall (20).

The head (16) of the mandrel (12) is of a diameter which is greater than the outer diameter of the tail end portion of the wall (20) and less than the outer diameter of the shank portion of the wall (20).

In a typical rivet embodying the invention

| | | |
|---|---|---|
| M | is | 2.9 mm |
| d₁ | is | 3.5 mm |
| d₂ | is | 3.0 mm |
| Rivet body outside diameter (D) | | 4.8 mm |
| Length of tail end portion (L) | | 5.0 mm |

When the rivet assembly is set, the shank of the rivet body (4) is inserted in a hole in a workpiece and a tool is forced to engage the head (10) of the rivet body while drawing the mandrel through the rivet body to set it. When the rivet is set, increased resistance to movement of the mandrel puts a greater strain on the neck of the mandrel which eventually breaks to complete the setting operation.

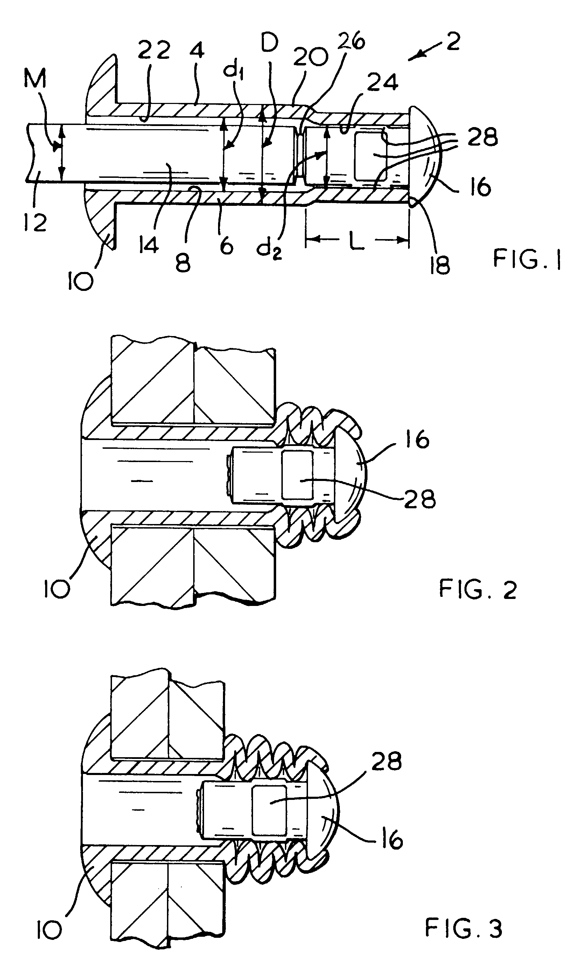

Figures 2 and 3 show the form of setting achieved with a rivet according to the invention.

In Figure 2 the rivet assembly (2) has been positioned in a hole through two plates whose combined thicknesses is about the maximum for efficient setting of the rivet. At the commencement of the setting operation the mandrel head (16) draws the tail end portion of the rivet wall downwards, and it not only extrudes outwards, past and round the outer edge of the mandrel head (16), but it also forces compression of the shank portion of the wall (20). This has two effects - firstly it causes metal to flow so that the portion of the wall in the hole in the workpiece fills the hole, and secondly, because of the gap between the outside of the mandrel, the shank portion of the wall concertinas, folding inwards and outwards. Shortly before the mandrel breaks, not only has metal flowed around the outside of the head (16) of the mandrel, but metal also flows either side of the collar portion (28).

A setting of the rivet is thus obtained which shows highly desirable characteristics, both in good hole filling ability, reliable and high mandrel head retention after setting, and a well formed head on the set rivet.

Figure 3 shows a typical setting of the rivet with a workpiece of a thickness G₂ which is approaching the minimum thickness of work piece with which the rivet can effectively be used.

## Claims

1. A blind rivet assembly comprising a rivet body having a shank with a bore extending axially therethrough and a head formed on one end portion of the shank and a mandrel assembled in the rivet body and comprising a stem portion extending through the bore and a setting head engaged with a tail end face of the rivet body, wherein the shank of the rivet body comprises a cylindrical wall of substantially uniform thickness, a head end portion of the wall defining a shank portion of the bore of a first diameter and a tail end portion of the wall defining a tail end portion of the bore of a second, lesser, diameter, and the stem portion of the mandrel is of substantially uniform diameter, which diameter is less than said second lesser diameter of the bore, which stem portion is provided with a neck at which the mandrel may break at the end of a setting operation, which neck is located adjacent the junction between the head end portion and the tail end portion of the wall, and the stem portion has an outwardly extending collar portion of the same diameter as the second diameter of the rivet body bore, which collar portion is spaced from the neck and the setting head of the mandrel and positioned in the tail end portion of the bore.

2. A rivet assembly according to Claim 1 wherein the setting head of the mandrel is greater in diameter than the tail end portion of the wall and less in diameter than the head end portion of the wall.

## Patentansprüche

1. Blindnietanordnung, umfassend:
einen Nietkörper, der einen Schaft mit einer Bohrung aufweist, die sich axial durch diese erstreckt, und einen Kopf, der auf einem Endabschnitt des Schaftes gebildet ist, und einen Dorn, der im Nietkörper montiert ist und einen Stielabschnitt umfaßt, der sich durch die Bohrung erstreckt, sowie einen Fixierkopf, der mit einer Schwanzendenstirnseite des Nietkörpers in Berührung steht, wobei der Schaft des Nietkörpers umfaßt:
eine zylindrische Wand von im wesentlichen gleichförmiger Dicke, einen Kopfendenabschnitt der Wand, die einen Schaftabschnitt der Bohrung mit einem ersten Durchmesser definiert, und einen Schwanzendenabschnitt der Wand, der einen Schwanzendenabschnitt der Bohrung mit einem zweiten kleineren Durchmesser definiert und der Stielabschnitt des Dorns einen im wesentlichen gleichförmigen Durchmesser besitzt, wobei dieser Durchmesser kleiner als der genannte zweite, kleinere Durchmesser der Bohrung ist, wobei der Stielabschnitt mit einem Hals versehen ist, bei welchem der Dorn am Ende einer Fixieroperation brechen kann, wobei der Hals in der Nähe des Übergangs zwischen dem Kopfendenabschnitt und dem Schwanzendenabschnitt der Wand plaziert ist, wobei der Stielabschnitt einen sich nach außen hin erstreckenden Kragenabschnitt mit dem gleichen Durchmesser wie dem zweiten Durchmesser der Nietkopfbohrung besitzt, wobei der Kragenabschnitt vom Hals und dem Fixierkopf des Dorns beabstandet und im Schwanzendenabschnitt der Bohrung positioniert ist.

2. Nietanordnung nach Anspruch 1, bei dem der Fixierkopf des Dorns im Durchmesser größer als der Schwanzendenabschnitt der Wand ist und im Durchmesser kleiner als der Kopfendenabschnitt der Wand ist.

## Revendications

1. Ensemble de rivet aveugle comportant un corps de rivet ayant une tige munie d'un alésage s'étendant axialement à travers celle-ci et une tête formée sur une première partie d'extrémité de la tige et un mandrin assemblé dans le corps de rivet et comportant une partie de tige s'étendant à travers l'alésage et une tête de mise en place en contact avec une face d'extrémité de queue du corps de rivet, dans lequel la tige du corps de rivet comporte une paroi cylindrique ayant une épaisseur pratiquement uniforme, une partie d'extrémité de tête de la paroi définissant une partie de tige de l'alésage d'un premier diamètre et une partie d'extrémité de queue de la paroi définissant une partie d'extrémité de queue de l'alésage d'un second diamètre plus petit et la partie de tige du mandrin a un diamètre pratiquement uniforme, lequel diamètre est plus petit que le second diamètre plus petit de l'alésage, laquelle partie de tige est munie d'un col au niveau duquel peut casser le mandrin à la fin de l'opération de mise en place, lequel col est situé adjacent à la jonction existant entre la partie d'extrémité de tête et la partie d'extrémité de queue de la paroi, et la partie de tige a une partie de collier s'étendant vers l'extérieur ayant le même diamètre que le second diamètre de l'alésage de corps de rivet, laquelle partie de collier est espacée du col et de la tête de mise en place du mandrin et est positionnée dans la partie d'extrémité de queue de l'alésage.

2. Ensemble de rivet selon la revendication 1, dans lequel la tête de mise en place du mandrin a un diamètre plus grand que la partie d'extrémité de queue de la paroi et un diamètre plus petit que la partie d'extrémité de tête de la paroi.
